# EUROPÄISCHE PATENTSCHRIFT

(11) **EP 1 525 649 B1**
(45) Veröffentlichungstag und Bekanntmachung des Hinweises auf die Patenterteilung: **29.03.2006**
(21) Anmeldenummer: 03784040.2
(22) Anmeldetag: 22.07.2003
(51) Int. Cl.: H02B 1/21

(54) **TRAGSCHIENE FÜR EINEN SAMMELSCHIENEN-ADAPTER SOWIE ADAPTER-SYSTEM MIT EINER SOLCHEN TRAGSCHIENE**
SUPPORT RAIL FOR A BUS BAR ADAPTER AND ADAPTER SYSTEM COMPRISING ONE SUCH SUPPORT RAIL
RAIL DE SUPPORT CON U POUR UN ADAPTATEUR DE BARRES OMNIBUS ET SYSTEME D'ADAPTATEUR CON U POUR CE RAIL DE SUPPORT

(30) Priorität: 02.08.2002 DE 10235494; 02.08.2002 DE 20211940 U
(43) Veröffentlichungstag der Anmeldung: 27.04.2005
(73) Patentinhaber: Bruchmann, Klaus, D-96450 Coburg (DE)
(72) Erfinder: Bruchmann, Klaus, D-96450 Coburg (DE)
(74) Vertreter: Appelt, Christian W.
(86) Internationale Anmeldenummer: PCT/EP2003/008006
(87) Internationale Veröffentlichungsnummer: WO 2004/015832

(56) Entgegenhaltungen:
- DE-A- 4 242 704
- DE-C- 19 515 922
- DE-U- 29 811 379

## Beschreibung

Die vorliegende Erfindung bezieht sich auf eine Tragschiene für einen Sammelschienen-Adapter zum Aufsetzen und Befestigen von Installationsgeräten, insbesondere elektrischen Installationsgeräten, wobei die Tragschiene in unterschiedlichen Positionen an dem Sammelschienen-Adapter befestigbar ist. Die Erfindung bezieht sich ferner auf ein Adapter-System, das mindestens eine solche Tragschiene sowie mindestens einen Sammelschienen-Adapter umfaßt. Eine solche Tragschiene bzw. ein solches Adapter-System eignet sich insbesondere für elektrische Sammelschienensysteme, insbesondere für dreiphasige Sammelschienensysteme und insbesondere zur Befestigung von Sicherungssystemen, Schaltsicherungseinheiten etc. aber auch für alle anderen elektrischen Installationsgeräte.

Aus der DE 42 42 704 C2 ist beispielsweise eine Vorrichtung zur Befestigung von elektrischen Installationsgeräten bekannt, die eine Tragschiene für einen Sammelschienen-Adapter und einen entsprechenden Sammelschienen-Adapter offenbart, wobei der Sammelschienen-Adapter zwei seitlich angeordnete Lochleisten aufweist, die zur Aufnahme von Schrauben dienen. Zur Befestigung der Tragschiene werden Schrauben durch die Öffnungen in der Tragschiene gesteckt und dann an den entsprechenden Positionen der jeweiligen Löcher der Lochleiste des Sammelschienen-Adapters angeschraubt.

Ein solches System hat insbesondere den Nachteil, daß keine stufenlos variable Positionierung der Tragschiene auf dem Sammelschienen-Adapter möglich ist. Ferner ist die Tragschiene weder lösbar, befestigbar noch verschiebbar, wenn ein Installationsgerät auf der Tragschiene bereits aufgesetzt ist. Soll daher die Position der Tragschiene verändert werden, wenn bereits ein Installationsgerät aufgesetzt bzw. montiert ist, muß dieses erst abgenommen werden, was gegebenenfalls auch erfordert, daß elektrische Verbindungen gelöst werden müssen. Ferner müssen die Schrauben vollständig aus den entsprechenden Löchern der Lochleiste herausgedreht werden, was aufwendig für die Handhabung ist und gegebenenfalls auch zum Verlust der Schrauben führen kann.

Aus dem deutschen Gebrauchsmuster DE 295 21 968 U1 ist ferner ein weiterer Sammelschienen-Adapter mit Tragschienen bekannt, bei dem die Tragschienen mit einem unter Vorspannung stehenden, federnden Rasthebel versehen sind, der einen Rastvorsprung zum Eingriff in Rastverzahnungen aufweist, die in einer Führungsschiene innerhalb des Adapters angeordnet sind.

Nachteil eines solchen Systems ist es, daß eine Positionierung und insbesdondere eine Sicherung der Positionierung der Tragschiene an dem Sammel-Adapter mittels einer unter Vorspannung stehenden federnden Rasthebel nicht sehr zuverlässig ist, weil insbesondere die Arretierung des Rasthebels aus Versehen gelöst werden kann. Auch ist die Kraft, mit der die Tragschiene an dem Sammelschienen-Adapter gehalten wird, relativ gering, was ebenfalls eine versehentliche Lösung der Arretierung erleichtert. Dies ist insbesondere bei den hier relevanten elektrischen Anwendungen mit hohen Gefahren verbunden, da durch ein versehentliches Verrutschen der Tragschiene ggf. elektrische Verbindungsleitungen zerstört oder beschädigt werden können, wobei insbesondere auch die Gefahr besteht, daß zerstörte Leitungen mit anderen leitenden Teilen in Kontakt kommen, wodurch Kurzschlüsse hervorgerufen werden können oder sogar Gefährdungen von Personen nicht auszuschließen sind. Auch sind solche federnden Rasthebel durch häufige oder auch unsachgemäße Bedienung starken Ermüdungserscheinungen unterworfen, die die obengenannten Nachteile noch verstärken.

Es ist daher eine Aufgabe der vorliegenden Erfindung, eine Tragschiene und ein Adapter-System zur Verfügung zu stellen, das die oben beschriebenen Nachteile des Standes der Technik vermeidet und insbesondere eine sichere und variable Befestigung einer Tragschiene an einem Sammelschienen-Adapter ermöglicht, die insbesondere auch im Hinblick auf die Bedienung und die Positionierung der Tragschiene benutzerfreundlich und dennoch sicher ist.

Diese Aufgabe wird durch eine Tragschiene für einen Sammelschienen-Adapter gemäß Anspruch 1 und ein Adaptersystem gemäß Anspruch 17 gelöst. Die Ansprüche 2 bis 16 betreffen besonders vorteilhafte Ausführungsformen der erfindungsgemäßen Tragschiene, die Ansprüche 18 und 19 betreffen besonders vorteilhafte Ausführungsformen des erfindungsgemäßen Adapter-Systems gemäß Anspruch 17.

Gemäß der Erfindung umfaßt die Tragschiene mindestens eine Klemmvorrichtung mit je mindestens einem einstellbaren bzw. bewegbaren Betätigungselement. Die Position des Betätigungselementes ist relativ zu einem an der Tragschiene vorgesehenen, zugehörigen Befestigungselement zwischen mindestens zwei Positionen ein- oder feststellbar, wobei die Einstellung der Positionen im wesentlichen unabhängig von dem zugehörigen Adapter erfolgen kann, d.h. insbesondere an dem Adapter selbst keine spezielle Vorrichtung vorgesehen sein muß, die eine Einstellung oder Befestigung des Betätigungselements erst ermöglicht. Die Erfindung vermeidet dabei insbesondere, daß an dem Sammelschienen-Adapter ein Befestigungselement bzw. eine Befestigungsvorrichtung, wie z.B. eine Lochleiste, vorgesehen ist, wodurch die oben beschriebenen Nachteile vermieden werden. Erfindungsgemäß ist in mindestens einer Verriegelungsposition des Betätigungselements zur Erzeugung einer Klemmwirkung mindestens ein Element oder auch nur ein Teilbereich des Elements der Klemmvorrichtung, die Teil der Tragschiene ist, zumindest gegen einen Teilbereich des Adapters gedrückt, so daß durch die erzielte Klemmwirkung oder Reibwirkung eine Relativbewegung zwischen der Tragschiene und dem Sammelschienen-Adapter in der Verriegelungsposition des Betätigungselements verhindert wird.

Eine solche Tragschiene hat insbesondere den Vorteil, daß durch das Vorsehen sowohl des Betätigungselements als auch eines Befestigungselements an der Tragschiene selbst an dem Sammelschienen-Adapter auf entsprechende Befestigungselemente, wie z.B. die Lochleisten gemäß dem oben beschriebenen Stand der Technik, verzichtet werden kann. Dies führt zum einen dazu, daß eine stufenlose Verstellung der Position der Tragschiene auf dem Sammelschienen-Adapter möglich ist, im Gegensatz zu dem Stand der Technik, bei dem durch die an dem Sammelschienen-Adapter vorgesehenen Befestigungselement lediglich diskrete Positionen der Tragschiene einstellbar sind, nämlich im Abstand der einzelnen Löcher in den oben genannten Lochleisten.

Ferner ist es bei der erfindungsgemäßen Tragschiene zum Verstellen bzw. Verschieben der Tragschiene nicht erforderlich, das Betätigungselement vollständig von der Tragschiene zu lösen, da es ausreicht, das Betätigungselement lediglich zu lockern, also aus einer Verriegelungsposition heraus zu bewegen, wobei das Betätigungselement weiterhin mit der Tragschiene verbunden sein kann und gemeinsam mit der Tragschiene stufenlos an eine neue Position verschoben werden kann. Dadurch wird vermieden, daß ein Betätigungselement erneut eingeführt werden muß oder beim Verschieben bzw. beim neuen Positionieren der Tragschiene verloren geht.

Die Erfindung stellt damit eine Tragschiene zur Verfügung, die zum einen sehr benutzerfreundlich ist, zum anderen sehr variabel und stufenlos eingestellt werden kann, so daß sie für eine Vielzahl von Anwendungen einsetzbar ist.

Bei einer besonders bevorzugten Ausführungsform ist bei mindestens einer Klemmvorrichtung als Betätigungselement eine Schraube vorgesehen, wobei handelsübliche Schrauben verwendet werden können, während bevorzugt das Befestigungselement eine Bohrung umfaßt, deren Wandbereich mit einem Gewinde der Schraube wechselwirkt. Es ist hierbei möglich, daß lediglich eine glatte Bohrung an dem Befestigungselement vorgesehen ist, wobei der Durchmesser der Bohrung und der Durchmesser der Schraube bzw. die Größe der Schraube so aufeinander abgestimmt sind, daß die Schraube sich in dem bevorzugt teilweise nachgiebigen Material, wie z.B. einem Kunststoffmaterial, selbst ein Gewinde schneidet.

Bei einer anderen Ausführungsform ist es jedoch auch möglich, daß die Bohrung des Befestigungselementes bereits mit einem Innengewinde versehen ist, das mit einem Außengewinde einer Schraube, die als Betätigungselement eingesetzt wird, wechselwirkt. Diese Lösung ist insbesondere dann vorgesehen, wenn das Material des Sammelschienen-Adapters ein relativ hartes Material ist, in das eine Schraube bzw. ein ähnliches Betätigungselement nur schwer ein Gewinde schneiden kann.

Bei einer weiteren bevorzugten Ausführungsform ist mindestens eine Klemmvorrichtung so ausgelegt, daß in einer Verriegelungsposition ein Teilbereich des Sammelschienen-Adapters zwischen einem Schraubenkopf einer als Betätigungselement eingesetzten Schraube und einer Gegenfläche bzw. Druckfläche des Befestigungselementes einklemmbar ist. Eine solche Klemmung eines Teilbereiches des Sammelschienen-Adapters stellt eine besonders sichere Befestigung zur Verfügung. Darüber hinaus ist die Stärke der relativen Sicherung regelbar, je nachdem, wie stark die Schraube, die als Betätigungselement eingesetzt wird, festgezogen wird. Selbstverständlich ist es auch möglich, daß zusätzlich beispielsweise eine Unterlegscheibe oder ein anderes Zwischenelement vorgesehen ist, so daß der Schraubenkopf oder auch die Gegenfläche bzw. Druckfläche des Befestigungselements nicht direkt auf einen Teilbereich des Sammelschienen-Adapters wirkt, sondern lediglich indirekt über ein zwischengelagertes bzw. dazwischen angeordnetes Element, oder aber auch über mehrere Elemente.

Bei einer besonders bevorzugten Ausführungsform umfaßt das Befestigungselement eine Spreizvorrichtung. Bevorzugt wird dabei beispielsweise ein Schraubenelement in das mit einer Spreizvorrichtung versehene Befestigungselement eingeschraubt, wobei mindestens ein Seitenbereich der Spreizvorrichtung bzw. ein Spreizelement durch Einschrauben der als Befestigungselement dienenden Schraube, oder gegebenenfalls eines anderen Betätigungselements von der Schraube weg nach außen gedrückt wird. Die nach außen gedrückten Bereiche des Spreizelements können dann gegen einen Teilbereich des Sammelschienen-Adapters, bevorzugt gegen einen Wandbereich, insbesondere einen innenliegenden Wandbereich, gedrückt werden, wodurch aufgrund der erzeugten Haftreibung und/oder Klemmwirkung eine relative Position zwischen der Tragschiene und dem Sammelschienen-Adapter festgelegt und eine relative Bewegung der beiden Elemente gegeneinander, zumindest bis zu einer gewissen, festgelegten Krafteinwirkung, zuverlässig vermieden werden.

Im Rahmen der Erfindung gibt es verschiedene Möglichkeiten, die Klemmvorrichtung und insbesondere das Betätigungselement und das zugehörige Befestigungselement an der Tragschiene und im Hinblick auf den Sammelschienen-Adapter anzuordnen. Bevorzugt ist das Betätigungselement so angeordnet, daß es zwischen einer Verriegelungsposition und einer Entriegelungsposition im wesentlichen geradlinig in einer Richtung verstellbar ist, die senkrecht zu einer Längsachse des Sammelschienen-Adapters liegt. Unter dem Begriff "Längsachse" des Sammelschienen-Adapters ist in der Regel die Richtung zu verstehen, in der die Tragschiene zwischen den verschiedenen Positionen auf dem Sammelschienen-Adapter verschoben bzw. versetzt und angeordnet werden kann.

Diese Ausgestaltung hat insbesondere den Vorteil, daß auf das Betätigungselement von vorne bzw. aus seitlicher Richtung zugegriffen werden kann, was für den Benutzer in der Regel sehr einfach möglich ist. Insbesondere in den Fällen, in denen als Betätigungselement eine Schraube eingesetzt wird, kann mit einem entsprechenden Werkzeug, beispielsweise einem Schraubendreher, von vorne oder aus seitlichen Richtungen gut auf das Betätigungselement zugegriffen werden.

Bei einer weiteren bevorzugten Ausführungsform ist mindestens ein Betätigungselement so angeordnet, daß es zwischen einer Verriegelungsposition und einer Entriegelungsposition im wesentlichen in einer Richtung verstellbar bzw. einstellbar ist, die parallel zu der Längsachse des Sammelschienen-Adapters verläuft. Insbesondere ist das Betätigungselement dabei so ausgebildet und positioniert, daß, beispielsweise mittels eines Werkzeuges, von oben oder von unten auf das Betätigungselement zugegriffen werden kann. Eine solche Ausgestaltung eines Betätigungselementes bzw. eine solche Anordnung eines Betätigungselementes hat insbesondere den Vorteil, daß auch dann auf das Betätigungselement zugegriffen bzw. dieses auch dann ent- bzw. verriegelt werden kann, wenn auf der Tragschiene ein Installationsgerät, beispielsweise eine Schaltsicherungseinheit, bereits angebracht ist. Ein Betätigungselement, auf das von vorne zugegriffen wird, wäre dagegen durch ein solches Installationsgerät bereits abgedeckt und könnte daher nicht gelöst bzw. verriegelt werden, ohne das Installationsgerät vorher zu demontieren.

Ein ähnlicher Vorteil kann übrigens auch dann erzeugt werden, wenn auf das Betätigungselement aus seitlichen Richtungen zugegriffen werden kann.

In den Fällen, in denen die Klemmvorrichtung und das Betätigungselement so angeordnet sind, daß auf das Betätigungselement im wesentlichen in Richtung der Längsachse des Sammelschienen-Adapters oder aus seitlichen Richtungen zugegriffen werden kann, ist es daher möglich, die Installationsgeräte zuerst auf der Tragschiene, die bereits auf dem Sammelschien-Adapter angeordnet ist, zu montieren, und dann die Installationsgeräte durch Verschieben der Tragschiene auf dem Sammelschienen-Adapter in die gewünschte Position zu bringen und diese dann, ohne die Installationsgeräte abnehmen zu müssen, in dieser Position festzulegen bzw. zu arretieren, indem über das Betätigungselement die Klemmvorrichtungen in die Verriegelungsposition gebracht wird. Dies ist insbesondere beispielsweise in den Fällen wichtig, in denen zum Beispiel zwei Schaltsicherungseinheiten, die jeweils auf einer Tragschiene angebracht werden sollen, miteinander verbunden werden sollen, wobei diese Verbindungen häufig durch ein leitendes ggf. starres Verbindungselement, das zwischen den Schaltsicherungseinheiten vorgesehen ist, verbunden werden, wobei der Kontakt gerade dadurch hergestellt wird, daß das leitende Verbindungselement an einer Schaltsicherungseinheit angebracht wird und die zweite Schaltsicherungseinheit dann auf die erste Schaltsicherungseinheit zubewegt wird, wodurch automatisch der Kontakt hergestellt wird.

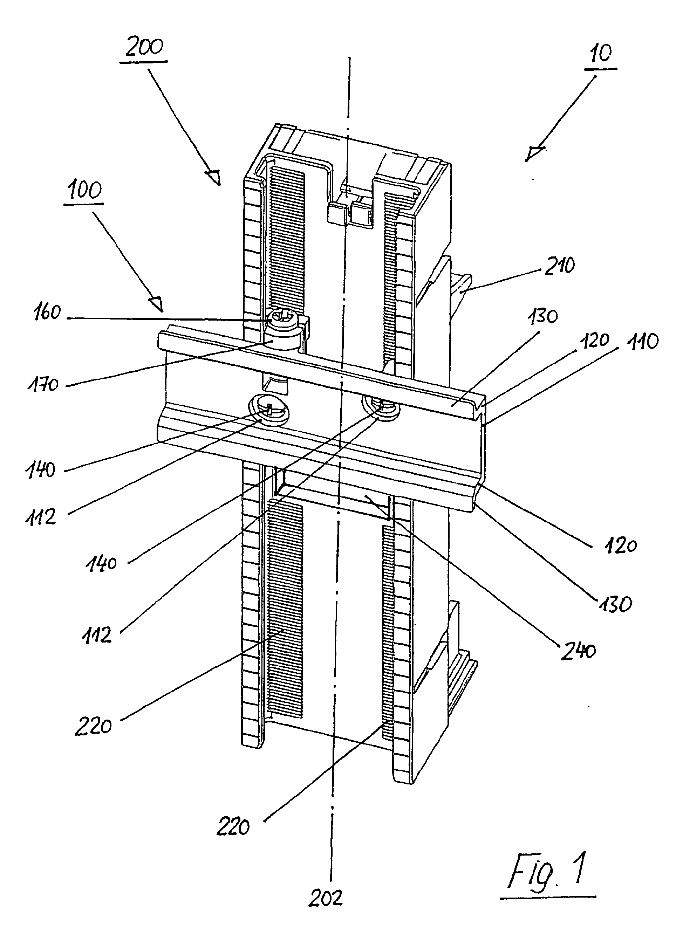

Die Richtungsangaben "oben", "unten", "vorne" und "seitlich" beziehen sich auf eine Positionierung eines Adapter-Systems, wie es in Fig. 1 dargestellt ist, so daß die Richtungen "oben" und "unten" in Richtung der Längsachse des Sammelschienen-Adapters liegen, während die Richtungen "vorne" und "seitlich" senkrecht zur Längsachse des Sammelschienen-Adapters verlaufen. Es soll verstanden werden, daß selbstverständlich ein Adapter-System tatsächlich im Raum auch anders positioniert werden kann, als es in Fig. 1 dargestellt ist, ohne vom Gegenstand der Erfindung abzuweichen oder die relative Bedeutung der Richtungsangaben im Hinblick auf das Adapter-System zu ändern.

Eine besonders variabel anwendbare Ausführungsform wird dadurch erzielt, daß mindestens zwei Klemmvorrichtungen vorgesehen sind, wobei die Richtungen, in denen die jeweiligen Betätigungselemente zwischen einer Verriegelungsposition und einer Entriegelungsposition einstellbar sind bzw. die Richtungen, in denen auf die Betätigungselemente zum Ver- bzw. Entriegeln zugegriffen werden kann, nicht parallel zueinander verlaufen. Je nach Einsatzgebiet und Verwendung und insbesondere je nach Art des Installationsgeräts bzw. der Installationsgeräte, die auf den Tragschienen montiert werden, ist die Wahrscheinlichkeit daher sehr hoch, daß zumindest auf eines der Betätigungselemente zugegriffen werden kann, ohne ein bereits auf der Tragschiene montiertes Installationsgerät zu demontieren, so daß auf einfache und zuverlässige Weise die gewünschte Positionierung der Tragschiene einstellbar und die Tragschiene an dem Sammelschienen-Adapter zuverlässig befestigt und gesichert werden kann.

Diese besondere Ausführungsform einer Tragschiene hat auch den Vorteil, daß nur eine standardisierte Tragschiene für unterschiedlichste Anwendungen eingesetzt werden kann, so daß nicht verschiedene Ausführungsformen für unterschiedliche Anwendungen vorgesehen werden müssen, was die einzelnen Produkte in der Herstellung sehr kostenintensiv macht, insbesondere da bei unterschiedlichen Tragschienen unterschiedliche Werkzeuge zur Herstellung zur Verfügung gestellt werden müssen, wobei je nach Stückzahl die Werkzeuge einen Großteil der Kosten auch in der Massenproduktion verursachen.

Insbesondere vorteilhaft ist es, wenn die beiden Richtungen, aus denen auf mindestens zwei der Betätigungselemente zugegriffen werden kann, im wesentlichen senkrecht zueinander verlaufen oder die beiden Betätigungselemente jeweils in Richtungen zwischen einer Verriegelungsposition und einer Entriegelungsposition verstellbar sind, die im wesentlichen senkrecht zueinander verlaufen, da auf diese Weise aus zwei komplett unterschiedlichen Richtungen die Klemmvorrichtungen betätigt werden können, was eine Vielzahl von Anwendungen und den variablen Einsatz von eventuell zu befestigenden Installationsgeräten ermöglicht.

Insbesondere kann eine Betätigungsrichtung, die im wesentlichen parallel zur Längsachse eines Sammelschienen-Adapters vorgesehen ist, vorteilhaft sein, da ein Installationsgerät in der Regel von vorne auf eine Tragschiene aufgesetzt wird, also in einer Richtung senkrecht zur Längsachse des Sammelschienen-Adapters, so daß ein Zugriff auf die Tragschiene von vorne bzw. ein Zugriff auf die an der Tragschiene angeordnete Klemmvorrichtung, insbesondere das Betätigungselement, nicht möglich ist, weil die Tragschiene und das Betätigungselement von dem montierten Installationsgerät abgedeckt sind. Neben einer parallelen Beweglichkeit bzw. einer parallelen Zugänglichkeit ist darüber hinaus auch eine seitliche Zugänglichkeit bzw. Beweglichkeit des Betätigungselements denkbar und bevorzugt, also aus einer Richtung im wesentlichen senkrecht zur Längsachse des Sammelschienen-Adapters, aber aus einer Richtung in der Regel parallel zu einer Längsausdehnung der jeweiligen Tragschiene.

Zur Verstärkung der Befestigungswirkung ist es bei besonders vorteilhaften Ausführungsformen vorgesehen, daß die Tragschiene, und insbesondere die Klemmvorrichtung bzw. das Befestigungselement, zumindest in einem Teilbereich mit einer aufgerauhten Oberfläche oder sogar mit einer strukturierten Oberfläche versehen ist, so daß eine Reibungswirkung bzw. Klemmwirkung erhöht wird. Eine aufgerauhte Oberfläche erhöht dabei den Reibungswiderstand zwischen einem Teilbereich der Tragschiene bzw. der Klemmvorrichtung und einem Teilbereich des Sammelschienen-Adapters, die, wie oben beschrieben, durch die Klemmvorrichtung, also durch das Befestigungselement und das Betätigungselement, gegeneinander gedrückt werden, so daß eine relative Beweglichkeit bzw. Verschiebbarkeit vermieden wird, während eine strukturierte Oberfläche zusätzlich eine formschlüssige Verbindung zur Verfügung stellen kann, die die oben beschriebene Klemmwirkung unterstützt und verstärkt.

Bevorzugt wird eine Tragschiene aus einem Kunststoffinaterial hergestellt, wobei unterschiedlichste Kunststoffmaterialien eingesetzt werden können, bevorzugt Polyamide, PA66 und/oder PPS. Als Kunststoffmaterialien werden insbesondere nicht-leitende Kunststoffmaterialien und auch glasfaserverstärkte Kunststoffmaterialien eingesetzt.

Die Erfindung betrifft ferner ein Adapter-System zum Aufsetzen und Befestigen von elektrischen Installationsgeräten mit mindestens einem Sammelschienen-Adapter und mindestens einer Tragschiene, wie sie oben beschrieben worden ist.

Bevorzugt umfaßt das Adapter-System dabei einen Sammelschienen-Adapter, der zumindest an Teilbereichen eine aufgerauhte Oberfläche und/oder eine strukturierte Oberfläche aufweist, was zu den oben beschriebenen Vorteilen führt. Besonders vorteilhaft ist es dabei, daß sowohl die Tragschiene als auch der Sammelschienen-Adapter mit einer aufgerauhten Oberfläche und/oder einer strukturierten Oberfläche versehen sind. Bevorzugt ist der Sammelschienen-Adapter aus einem Kunststoffinaterial hergestellt, insbesondere bevorzugt aus einem gleichen oder aus einem ähnlichen Material wie die zugehörigen Tragschienen. Auch für den Sammelschienen-Adapter ist es bevorzugt, ein nicht-leitendes Kunststoffmaterial vorzusehen, insbesondere um aus Sicherheitsgründen eine zusätzliche Isolierung zur Verfügung zu stellen, insbesondere für den Fall, daß aus Versehen oder bei Beschädigungen einzelner Geräte ein stromführendes Element in Kontakt entweder mit einer Tragschiene oder mit einem Sammelschienen-Adapter kommt und gegebenenfalls Strom durch diese Elemente weitergeleitet wird, was zu einem Kurzschluß oder zu Gefährdungen von Personen führen kann.

Diese Merkmale und Vorteile der vorliegenden Erfindung werden anhand der nachfolgend beschriebenen Zeichnungen deutlich, die auf schematische Weise besonders vorteilhafte Ausführungsformen der erfindungsgemäßen Tragschiene bzw. des erfindungsgemäßen Adapter-Systems darstellen.
- Fig. 1: zeigt schematisch eine perspektivische Ansicht einer ersten Ausführungsform eines erfindungsgemäßen Adapter-Systems mit einer erfindungsgemäßen Tragschiene;
- Fig. 2: zeigt eine Draufsicht auf eine zweite Ausführungsform eines erfindungsgemäßen Adapter-Systems mit einer erfindungsgemäßen Tragschiene;
- Fig. 3: zeigt schematisch einen Querschnitt durch die in Fig. 2 gezeigte Ausführungsform entlang der Linie III-III;
- Fig. 4: zeigt schematisch einen Teil-Querschnitt durch die in Fig. 2 gezeigte Ausführungsform entlang der Linie IV-IV;
- Fig. 5: zeigt schematisch eine mit Fig. 4 vergleichbare Darstellung einer dritten Ausführungsform eines erfindungsgemäßen Adapter-Systems mit einer erfindungsgemäßen Tragschiene.

Fig. 1 zeigt schematisch und in perspektivischer Ansicht eine erste Ausführungsform eines erfindungsgemäßen Adapter-Systems 10, das eine Tragschiene 100 und einen Sammelschienen-Adapter 200 umfaßt. Der Sammelschienen-Adapter 200 ist im wesentlichen länglich ausgebildet und weist eine Längsachse 202 auf, parallel zu der sich die Tragschiene 100 entlang des Sammelschienen-Adapters 200 verschieben läßt.

Der Sammelschienen-Adapter 200 umfaßt ferner Befestigungen 210, mittels denen der Sammelschienen-Adapter 200 an einem Sammelschienensystem (nicht gezeigt) befestigt werden kann.

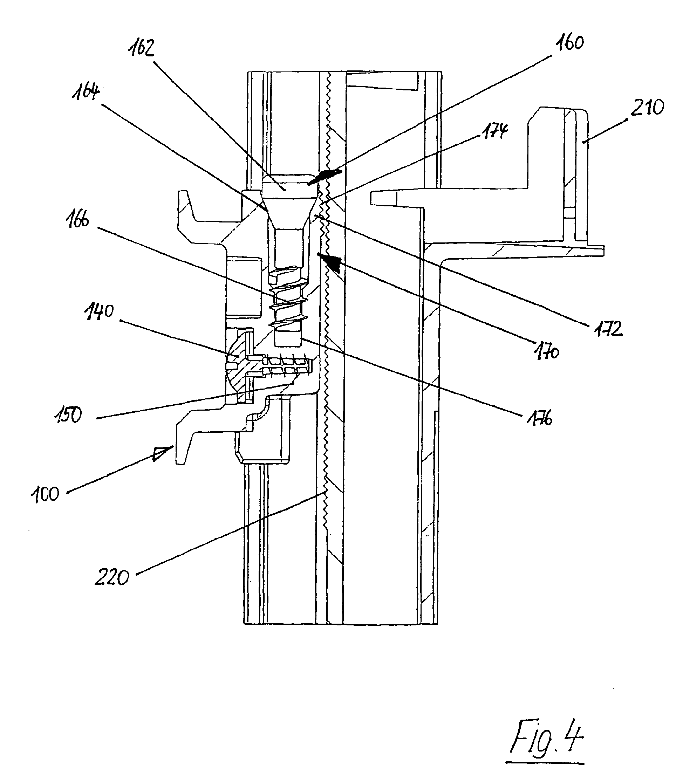

Die in Fig. 1 gezeigte Ausführungsform des Sammelschienen-Adapters 200 umfaßt ferner mehrere strukturierte Oberflächen 220, die zu einer Erhöhung der Sicherung der Tragschiene 100 in der jeweiligen Position beitragen, worauf nachfolgend noch im Detail eingegangen werden wird (siehe insbesondere Beschreibung zu Fig. 4).

Ferner umfaßt die in Fig. 1 gezeigte Ausführungsform des Sammelschienen-Adapters 200 eine Durchbrechung 240, durch die insbesondere Anschlußleitungen etc. geführt werden können, an die nicht gezeigte Installationsgeräte, beispielsweise eine Schaltsicherungseinheit, die auf der Tragschiene 100 befestigbar ist, angeschlossen werden können.

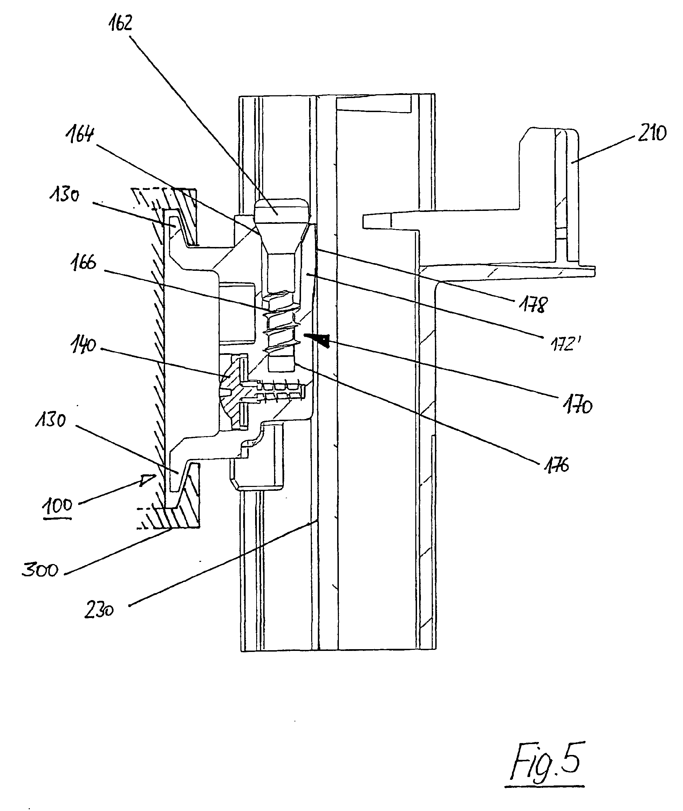

Auf dem Sammelschienen-Adapter 200 ist eine Tragschiene 100 befestigt, die eine Basisplatte 110 umfaßt, von deren Randbereich sich im wesentlichen in einem rechten Winkel erste Stege 120 (nach vorne) erstrecken, an denen wiederum zweite Stege 130 befestigt sind, die sich erneut im wesentlichen im rechten Winkel zu den ersten Stegen 120 (nach oben und unten) erstrecken und damit im wesentlichen parallel zu der Basisplatte 110 verlaufen. Diese erläuterte Struktur der Tragschiene 100 mit Basisplatte 110, ersten Stegen 120 und zweiten Stegen 130 dient der Befestigung von Installationsgeräten, wie sie insbesondere schematisch in Fig. 5 gezeigt und im Zusammenhang mit dieser Figur kurz erläutert wird.

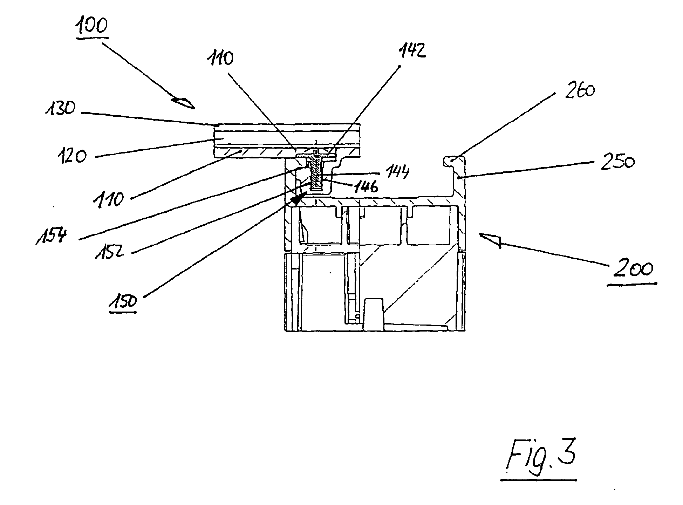

Die in Figur 1 gezeigte Ausführungsform der Tragschiene 100 umfaßt insgesamt 3 Klemmvorrichtungen, wobei zwei Klemmvorrichtungen im wesentlichen identisch ausgebildet sind und jeweils eine Öffnung 112 in der Basisplatte 110 der Tragschiene 100 sowie jeweils eine Schraube 140 und eine Befestigungselement (150, siehe Figur 3) umfassen, während eine weitere Klemmvorrichtung eine Schraube 160 und eine Spreizvorrichtung 170 umfaßt. Die einzelnen Klemmvorrichtungen und deren Funktionsweisen werden insbesondere in Figur 3 bzw. in den Figuren 4 und 5 erläutert werden.

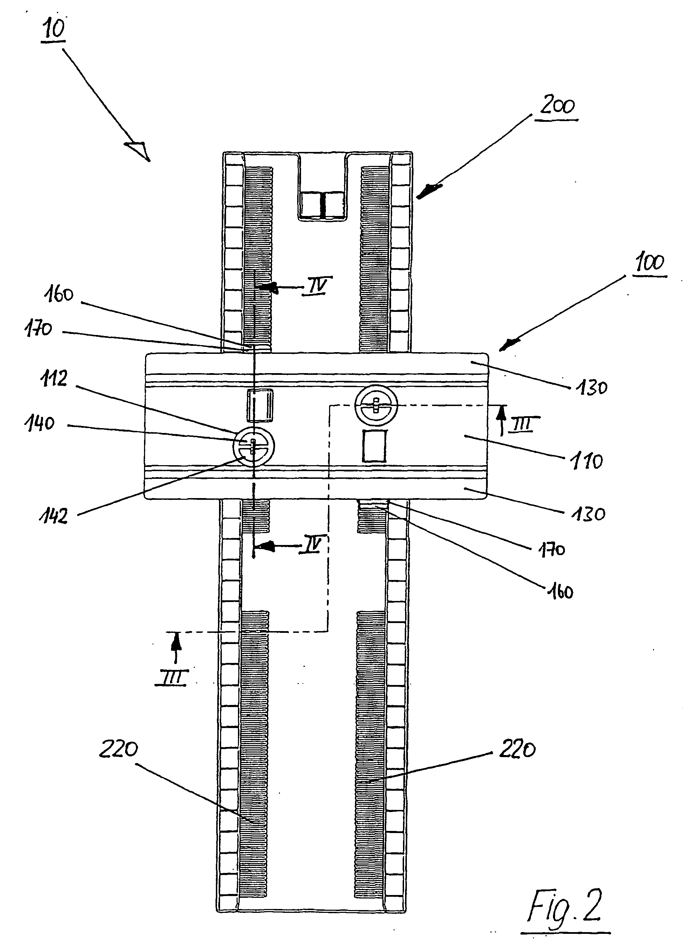

Figur 2 zeigt eine Draufsicht auf eine zweite Ausführungsform eines Adapter-Systems 10 mit einer Tragschiene 100 und einem Sammelschienen-Adapter 200, die im wesentlichen der in Figur 1 gezeigten Ausführungsformen entspricht. Gleiche oder ähnliche Bauteile wurden daher mit identischen Bezugszeichen versehen.

In Figur 2 wird insbesondere die Positionierung der Öffnungen 112 in der Basisplatte 110 der Tragschiene 100 deutlich, die, in Richtung einer Längsachse des Sammelschienen-Adapters 200 gesehen, versetzt angeordnet sind.

Bei den Schrauben 140 handelt es sich um handelsübliche Schrauben mit einem Schraubenkopf 142, der mit einem Kreuzschlitz versehen ist.

Im Gegensatz zu der in Figur 1 gezeigten Ausführungsform ist die in Figur 2 gezeigte Ausführungsform des Sammelschienen-Adapters 200 mit insgesamt vier Klemmvorrichtungen versehen, von denen zwei identisch mit denen der in Fig. 1 gezeigten Ausführungsform ausgebildet sind und zwei weitere Klemmvorrichtungen jeweils eine Schraube 160 und eine Spreizvorrichtung 170 umfassen. Die in Figur 2 gezeigte Ausführungsform umfaßt daher zwei verschiedene Arten von Klemmvorrichtungen, die jeweils im Hinblick auf eine Längsachse des Sammelschienen-Adapters 200 vertauscht bzw. zu einem auf der Längsachse lilegenden Punkt zwischen den Klemmvorrichtungen im wesentlichen punktsymmetrisch angeordnet sind. Die Funktionsweisen der Klemmvorrichtungen werden in den nachfolgenden Figuren im Detail erläutert werden.

Figur 3 zeigt schematisch einen Querschnitt entlang der Linie III-III der in Figur 2 gezeigten Ausführungsform, insbesondere zur Erläuterung der Klemmvorrichtung, die die Schraube 140 und das Befestigungselement 150 umfaßt.

Wie in Figur 3 deutlich ersichtlich ist, umfaßt die Schraube 140 einen Schraubenkopf 142 und einen mit einem Gewinde 146 versehenen Schraubenhals 144.

Das Befestigungselement 150 weist eine Bohrung 152 auf, in die die Schraube 140 eingesetzt ist. Die Schraube 140 und das Befestigungselement 150 bzw. die Bohrung 152 sind dabei so dimensioniert, daß der Außendurchmesser des Gewindes 146 der Schraube 140 geringfügig größer ist als der Innendurchmesser der Bohrung 152 in dem Befestigungselement 150, im wesentlichen entspricht der Innendurchmesser der Bohrung 152 dem Außendurchmesser der Schraube 140 ohne Gewinde 146, so daß beim Einsetzen der Schraube 140 in die Bohrung 152 der Befestigungselements 150 im wesentlichen ein Gewinde in die Bohrung 152 geschnitten wird.

Das Befestigungselement 150 umfaßt ferner eine Gegenfläche 154, auch als Druckfläche oder Klemmfläche bezeichnet, wobei bei dem in Figur 3 gezeigten Verriegelungszustand des Adapter-Systems 10 der Schraubenkopf 142 der Schraube 140, genauer ein Teil der unteren Fläche des Schraubenkopfs 142, mit der Gegenfläche 154 des Befestigungselements 150 einen Steg 260 des Sammelschienen-Adapters 200, der im wesentlichen parallel zur Basisplatte 110 der Tragschiene 100 verläuft und sich im wesentlichen in einem 90° Winkel von einem Steg 250 erstreckt, einklemmt, so daß die Tragschiene 100 fest an dem Sammelschienen-Adapter 200 angeklemmt ist, so daß eine relative Verschiebung der Tragschiene 100 gegenüber dem Sammelschienen-Adapter 200 nicht möglich ist.

Es soll an dieser Stelle darauf hingewiesen werden, daß auf der gegenüberliegenden, in Fig. 3 rechten Seite eine ähnliche Befestigung möglich ist, dies ist jedoch in Fig. 3 aufgrund des Schnittverlaufs der Darstellung nicht gezeigt. Es soll jedoch auch darauf hingewiesen werden, daß eine zusätzliche Befestigung durch eine weitere Klemmvorrichtung zwar möglich, jedoch nicht unbedingt erforderlich ist, da bereits die in Fig. 3 gezeigte Klemmvorrichtung mit der Schraube 140 an dem Befestigungselement 150 eine ausreichende Sicherung der Tragschiene 100 an dem Sammelschienen-Adapter 200 sicherstellt. Ferner soll darauf hingewiesen werden, daß die Stärke der Klemmwirkung der Schraube 140 und das Befestigungselement 150 einstellbar ist, je nachdem wie weit die Schraube 140 in das Befestigungselement 150 hineingeschraubt wird, so daß die Stärke der Klemmwirkung vom Benutzer und in Abhängigkeit von der Anwendung eingestellt werden kann.

Fig. 4 zeigt schematisch einen Querschnitt entlang der Linie IV-IV der in Fig. 2 gezeigten Ausführungsform, wobei in Fig. 4 insbesondere auch die zweite Klemmvorrichtung mit einer Schraube 160 und einer Spreizvorrichtung 170 gezeigt ist, so daß deren Funktionsweise deutlich wird. Im Hinblick auf die Schraube 140 und das Befestigungselement 150 sowie deren Funktionsweise wird auf die obige Beschreibung im Hinblick auf Fig. 3 verwiesen.

Die zweite Art von Klemmvorrichtungen, die bei der in der Fig. 2 und 4 dargestellten Ausführungsform zum Einsatz kommt, umfaßt eine Schraube 160 und eine Spreizvorrichtung 170, die auch die Aufgaben des in Fig. 3 gezeigten Befestigungselements 150 in der Art übernimmt, daß die Schraube 160 in eine Bohrung 176 der Spreizvorrichtung 170 eingesetzt ist. Zur Dimensionierung der Bohrung 176 und der Schraube 162 wird auf die entsprechenden Ausführungen zu Fig. 3 verweisen. Es soll jedoch an dieser Stelle darauf hingewiesen werden, daß es prinzipiell auch möglich ist, daß die Bohrung 176 bereits mit einem Innengewinde versehen ist, das so ausgelegt ist, daß ein Außengewinde 166 der Schraube 160 in dieses Innengewinde eingreift, so daß eine sichere Befestigung der Schraube 160 in der Spreizvorrichtung 170 sichergestellt ist.

Wie gut in Fig. 4 ersichtlich ist, umfaßt die Schraube 160 einen Schraubenkopf 162, der mit konischen Seitenflächen 164 versehen ist. Wird nun die Schraube 160 in die Bohrung 176 eingeschraubt, drücken die konischen Seitenflächen 164 gegen schräge Gegenflächen eines Spreizelements 172 der Spreizvorrichtung 170, so daß das Spreizelement 172 bezogen auf eine Längsachse der Schraube 160 nach außen gedrückt wird.

In Fig. 4 befindet sich die Klemmvorrichtung in einer Entriegelungsposition, in der das Spreizelement 172 nicht gegen eine Klemmfläche, hier eine strukturierte Oberfläche 220 des Sammelschienen-Adapters 200, gedrückt wird, so daß die in Fig. 4 gezeigte Klemmvorrichtung mit Schraube 160 und Spreizvorrichtung 170 ein Verschieben der Tragschiene 100 ermöglichen würde.

Wie in Fig. 4 ersichtlich, ist auch das Spreizelement 172 mit einer strukturierten Oberfläche 174 versehen, die in die strukturierte Oberfläche 220 des Sammelschienen-Adapters 200 eingreift, wenn das Spreizelement 172 beim weiteren Einschrauben der Schraube 160 gegen die strukturierte Oberfläche 220 gedrückt wird, so daß die Zähne der strukturierten Oberflächen 174, 220 ineinander greifen und so die Klemmwirkung bzw. Verriegelungswirkung der Klemmvorrichtung noch erhöhen.

Fig. 5 zeigt eine weitere Ausführungsform eines Adapter-Systems und eine Darstellung, die mit der Darstellung in Fig. 4 vergleichbar ist. Gleiche oder ähnliche Elemente wurden mit identischen Bezugszeichen versehen, und es wird auf die Beschreibung der Fig. 4 verwiesen.

Die in Fig. 5 gezeigte Ausführungsform entspricht der in Fig. 4 gezeigten Ausführungsform mit der Ausnahme, daß ein Spreizelement 172' nicht mit einer strukturierten Oberfläche sondern mit einer im wesentlichen glatten, unstrukturierten Oberfläche 178 versehen ist. Gleiches gilt für den Sammelschienen-Adapter 200, der ebenfalls nur eine unstrukturierte Oberfläche 230 bzw. Klemmfläche aufweist.

Die Klemmvorrichtung befindet sich bei der in Fig. 5 gezeigten Ausführungsform in einem Verriegelungszustand, bei dem die Schraube 160 so weit in die Bohrung 170 eingedreht ist, daß die konischen Seitenflächen 164 das Spreizelement 172' in Bezug auf eine Längsachse der Schraube nach außen und gegen die unstrukturierte Oberfläche 230 des Sammelschienen-Adapters 200 drücken, so daß eine Klemmwirkung und eine Verriegelung erzielt wird. Die Klemmwirkung wird hier lediglich durch den Druck und die dadurch hervorgerufene Reibung und gegebenenfalls auch teilweise Verformung des leicht nachgiebigen Kunststoffmaterials, aus dem die Vorrichtung hergestellt ist, sichergestellt. Die Stärke der Klemmwirkung kann auch bei dieser Klemmvorrichtung variiert werden und ist abhängig davon, wie weit die Schraube 160 in die Bohrung 176 eingeschraubt wird.

Zusätzlich zeigt Fig. 5 in schematischer Form ein Installationsgerät 300, das auf der Tragschiene 100 aufgesetzt ist, wobei das Installationsgerät 300 so ausgebildet ist, daß es die Stege 130 der Tragschiene 100 hintergreift, so daß eine sichere Befestigung des Installationsgeräts 300 gewährleistet ist.

Die in den Fig. 1 bis 5 gezeigten Tragschienen 100 und Sammelschienen-Adapter 200 bestehen aus glasfaserverstärktem PA66. Es sind jedoch auch andere Materialien für die Tragschienen 100 und die Sammelschienen-Adapter 200 einsetzbar, beispielsweise PPS. Bevorzugt sind zusammengehörige Tragschienen 100 und Sammelschienen-Adapter 200 aus einem identischen Material hergestellt, es ist jedoch auch möglich, unterschiedliche Materialien für Tragschiene 100 und Sammelschienen-Adapter 200 auszuwählen.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Adapter-System
- 100: Tragschiene
- 110: Basisplatte (Tragschiene)
- 112: Öffnungen (Basisplatte)
- 120: erste Stege (Tragschiene)
- 130: zweite Stege (Tragschiene)
- 140: Schraube (Betätigungselement)
- 142: Schraubenkopf
- 144: Schraubenhals
- 146: Gewinde
- 150: Befestigungselement
- 152: Bohrung (Befestigungselement)
- 154: Gegenfläche (Befestigungselement)
- 160: Schraube (Betätigungselement)
- 162: Schraubenkopf
- 164: konische Seitenfläche (Schraubenkopf)
- 166: Gewinde
- 170: Spreizvorrichtung
- 172, 172': Spreizelement
- 174: strukturierte Oberfläche (Spreizelement)
- 176: Bohrung (Spreizvorrichtung)
- 178: unstrukturierte Oberfläche (Spreizelement)
- 200: Sammelschienen-Adapter
- 202: Längsachse (Sammelschienen-Adapter)
- 210: Befestigung (Sammelschienen-Adapter)
- 220: strukturierte Oberfläche (Sammelschienen-Adapter)
- 230: unstrukturierte Oberfläche (Sammelschienen-Adapter)
- 240: Durchbrechnung
- 250: Steg (Sammelschienen-Adapter)
- 260: Steg (Sammelschienen-Adapter)
- 300: Installationsgerät

## Patentansprüche

1. Tragschiene (100) für einen Sammelschienen-Adapter (200) zum Aufsetzen und Befestigen von elektrischen Installationsgeräten (300), wobei die Tragschiene (100) in unterschiedlichen Positionen an dem Sammelschienen-Adapter (200) befestigbar ist,
**dadurch gekennzeichnet, daß**
die Tragschiene (100) mindestens eine Klemmvorrichtung mit je mindestens einem einstellbaren Betätigungselement (140, 160) umfaßt, das relativ zu einem an der Tragschiene (100) vorgesehenen, zugehörigen Befestigungselement (150, 170) zwischen mindestens zwei Positionen einstellbar ist, wobei in mindestens einer Verriegelungsposition zur Erzeugung einer Klemmwirkung mindestens ein Element (142, 172, 172') der an der Tragschiene (100) vorgesehenen Klemmvorrichtung oder ein Teilbereich dieses Elementes (142, 172, 172') gegen einen Teilbereich (220, 230, 260) des Sammelschienen-Adapters (200) gedrückt wird, so daß eine Relativbewegung zwischen Tragschiene (100) und Sammelschienen-Adapter (200) verhindert wird.

2. Tragschiene (100) nach Anspruch 1, **dadurch gekennzeichnet, daß** mindestens ein Betätigungselement eine Schraube (140, 160) ist.

3. Tragschiene (100) nach Anspruch 2, **dadurch gekennzeichnet, daß** das zugehörige Befestigungselement eine Bohrung (152, 176) umfaßt, deren Wandbereich mit einem Gewinde (146, 166) der Schraube (140, 160) wechselwirkt.

4. Tragschiene (100) nach Anspruch 3, **dadurch gekennzeichnet, daß** die Bohrung mit einem Innengewinde versehen ist.

5. Tragschiene (100) nach einem der vorhergehenden Ansprüche, **dadurch gekennzeichnet, daß** mindestens eine Klemmvorrichtung so ausgelegt ist, daß in einer Verriegelungsposition ein Teilbereich (260) des Sammelschienen-Adapters (200) zwischen einem Schraubenkopf (142) einer als Betätigungselement dienenden Schraube (140) und einer Gegenfläche (154) des Befestigungselementes (150) einklemmbar ist.

6. Tragschiene (100) nach einem der vorhergehenden Ansprüche, **dadurch gekennzeichnet, daß** mindestens eine Klemmvorrichtung so ausgelegt ist, daß ein Befestigungselement eine Spreizvorrichtung (170) umfaßt.

7. Tragschiene (100) nach einem der vorhergehenden Ansprüche, **dadurch gekennzeichnet, daß** ein Betätigungselement (140, 160) mindestens einer Klemmvorrichtung zwischen einer Verriegelungsposition und einer Entriegelungsposition im wesentlichen geradlinig in einer Richtung einstellbar ist, die im wesentlichen senkrecht zu einer Längsachse (202) des Sammelschienen-Adapters (200) verläuft.

8. Tragschiene (100) nach einem der vorhergehenden Ansprüche, **dadurch gekennzeichnet, daß** ein Betätigungselement (140, 160) mindestens einer Klemmvorrichtung zwischen einer Verriegelungsposition und einer Entriegelungsposition im wesentlichen geradlinig in einer Richtung einstellbar ist, die im wesentlichen parallel zu einer Längsachse (202) des Sammelschienen-Adapters (200) verläuft.

9. Tragschiene (100) nach Anspruch 7 oder 8, **dadurch gekennzeichnet, daß** mindestens zwei Klemmvorrichtungen vorgesehen sind, wobei die Richtung, in der ein Befestigungselement (140) zwischen einer Verriegelungsposition und einer Entriegelungsposition einstellbar ist, nicht parallel zu einer Richtung ist, in der ein zweites Befestigungselement (160) zwischen einer Verriegelungsposition und einer Entriegelungsposition einstellbar ist.

10. Tragschiene (100) nach Anspruch 9, **dadurch gekennzeichnet, daß** die beiden Richtungen, in denen die jeweiligen Befestigungselemente (140, 160) zwischen einer Verriegelungsposition und einer Entriegelungsposition einstellbar sind, im wesentlichen senkrecht zueinander verlaufen.

11. Tragschiene (100) nach einem der vorhergehenden Ansprüche, **dadurch gekennzeichnet, daß** mindestens ein Betätigungselement (140) aus einer Richtung betätigbar ist, die im wesentlichen senkrecht zur Längsachse (202) des Sammelschienen-Adapters (200) verläuft.

12. Tragschiene (100) nach Anspruch 11, **dadurch gekennzeichnet, daß** das mindestens eine Betätigungselement (140) durch eine Öffnung in der Tragschiene (100) betätigbar ist.

13. Tragschiene (100) nach einem der vorhergehenden Ansprüche, **dadurch gekennzeichnet, daß** mindestens ein Betätigungselement (160) aus einer Richtung betätigbar ist, die im wesentlichen parallel zur Längsachse (202) des Sammelschienen-Adapters (200) verläuft.

14. Tragschiene (100) nach einem der vorhergehenden Ansprüche, **dadurch gekennzeichnet, daß** die Tragschiene zumindest in einem Teilbereich eine aufgerauhte Oberfläche zur Verstärkung der Klemmwirkung aufweist.

15. Tragschiene (100) nach einem der vorhergehenden Ansprüche, **dadurch gekennzeichnet, daß** die Tragschiene zumindest in einem Teilbereich eine strukturierte Oberfläche (174) zur Verstärkung der Klemmwirkung aufweist.

16. Tragschiene (100) nach einem der vorhergehenden Ansprüche, **dadurch gekennzeichnet, daß** die Tragschiene (100) aus einem Kunststoffmaterial hergestellt ist.

17. Adapter-System (10) zum Aufsetzen und Befestigen von elektrischen Installationsgeräten (300) mit mindestens einem Sammelschienen-Adapter (200) und mindestens einer Tragschiene (100) nach einem der vorhergehenden Ansprüche.

18. Adapter-System (10) nach Anspruch 17, **dadurch gekennzeichnet, daß** der Sammelschienen-Adapter (200) und/oder die Tragschiene (100) zumindest in einem Teilbereich eine aufgerauhte Oberfläche aufweisen.

19. Adapter-System (10) nach Anspruch 17 oder 18, **dadurch gekennzeichnet, daß** der Sammelschienen-Adapter (200) und/oder die Tragschiene (100) zumindest in einem Teilbereich eine strukturierte Oberfläche (220; 174) aufweisen.

## Revendications

1. Rail de support (100) pour un adaptateur de barres omnibus (200) destiné à monter et fixer des appareils d'installations électriques (300), le rail de support (100) pouvant être fixé dans différentes positions à l'adaptateur de barres omnibus (200),
**caractérisé en ce que**
le rail de support (100) comporte au moins un dispositif de serrage comprenant respectivement au moins un élément d'actionnement réglable (140, 160), qui peut être réglé par rapport à un élément de fixation (150, 170) associé, prévu sur le rail de support (100), entre au moins deux positions, au moins un élément (142, 172, 172') du dispositif de serrage prévu sur le rail de support (100) ou une zone partielle de cet élément (142, 172, 172') étant pressé(e) contre une zone partielle (220, 230, 260) de l'adaptateur de barres omnibus (200) dans au moins une position verrouillée destinée à générer une action de serrage, de sorte que cela empêche un déplacement relatif entre le rail de support (100) et l'adaptateur de barres omnibus (200).

2. Rail de support (100) selon la revendication 1, **caractérisé en ce qu'**au moins un élément d'actionnement est une vis (140, 160).

3. Rail de support (100) selon la revendication 2, **caractérisé en ce que** l'élément de fixation associé comporte un alésage (152, 176), dont la zone de paroi est en interaction avec un filet (146, 166) de la vis (140, 160).

4. Rail de support (100) selon la revendication 3, **caractérisé en ce que** l'alésage est pourvu d'un filet interne.

5. Rail de support (100) selon l'une quelconque des revendications précédentes, **caractérisé en ce qu'**au moins un dispositif de serrage est étudié de sorte qu'une zone partielle (260) de l'adaptateur de barres omnibus (200) peut être serrée dans une position verrouillée entre une tête de vis (142) d'une vis (140) servant d'élément d'actionnement et une surface complémentaire (154) de l'élément de fixation (150).

6. Rail de support (100) selon l'une quelconque des revendications précédentes, **caractérisé en ce qu'**au moins un dispositif de serrage est étudié de sorte qu'un élément de fixation comporte un dispositif d'écartement (170).

7. Rail de support (100) selon l'une quelconque des revendications précédentes, **caractérisé en ce qu'**un élément d'actionnement (140, 160) d'au moins un dispositif de serrage peut être réglé entre une position verrouillée et une position déverrouillée de façon sensiblement rectiligne dans une direction qui s'étend sensiblement perpendiculairement à un axe longitudinal (202) de l'adaptateur de barres omnibus (200).

8. Rail de support (100) selon l'une quelconque des revendications précédentes, **caractérisé en ce qu'**un élément d'actionnement (140, 160) d'au moins un dispositif de serrage peut être réglé entre une position verrouillée et une position déverrouillée de façon sensiblement rectiligne dans une direction qui s'étend sensiblement parallèlement à un axe longitudinal (202) de l'adaptateur de barres omnibus (200).

9. Rail de support (100) selon la revendication 7 ou 8, **caractérisé en ce qu'**au moins deux dispositifs de serrage sont prévus, la direction dans laquelle un élément de fixation (140) peut être réglé entre une position verrouillée et une position déverrouillée n'étant pas parallèle à une direction dans laquelle un second élément de fixation (160) peut être réglé entre une position verrouillée et une position déverrouillée.

10. Rail de support (100) selon la revendication 9, **caractérisé en ce que** les deux directions, dans lesquelles les éléments de fixation (140, 160) respectifs peuvent être réglés entre une position verrouillée et une position déverrouillée, s'étendent sensiblement perpendiculairement l'une à l'autre.

11. Rail de support (100) selon l'une quelconque des revendications précédentes, **caractérisé en ce qu'**au moins un élément d'actionnement (140) peut être actionné à partir d'une direction qui s'étend sensiblement perpendiculairement à l'axe longitudinal (202) de l'adaptateur de barres omnibus (200).

12. Rail de support (100) selon la revendication 11, **caractérisé en ce que** le au moins un élément d'actionnement (140) peut être actionné par une ouverture dans le rail de support (100).

13. Rail de support (100) selon l'une quelconque des revendications précédentes, **caractérisé en ce qu'**au moins un élément d'actionnement (160) peut être actionné à partir d'une direction qui s'étend sensiblement parallèlement à l'axe longitudinal (202) de l'adaptateur de barres omnibus (200).

14. Rail de support (100) selon l'une quelconque des revendications précédentes, **caractérisé en ce que** le rail de support comprend au moins dans une zone partielle une surface rugueuse destinée à renforcer l'action de serrage.

15. Rail de support (100) selon l'une quelconque des revendications précédentes, **caractérisé en ce que** le rail de support comprend au moins dans une zone partielle une surface structurée (174) destinée à renforcer l'action de serrage.

16. Rail de support (100) selon l'une quelconque des revendications précédentes, **caractérisé en ce que** le rail de support (100) est fabriqué à partir d'une matière plastique.

17. Système d'adaptateur (10) destiné à monter et fixer des appareils d'installation électriques (300) comprenant au moins un adaptateur de barres omnibus (200) et au moins un rail de support (100) selon l'une quelconque des revendications précédentes.

18. Système d'adaptateur (10) selon la revendication 17, **caractérisé en ce que** l'adaptateur de barres omnibus (200) et/ou le rail de support (100) comprennent au moins dans une zone partielle une surface rugueuse.

19. Système d'adaptateur (10) selon la revendication 17 ou 18, **caractérisé en ce que** l'adaptateur de barres omnibus (200) et/ou le rail de support (100) comprennent au moins dans une zone partielle une surface structurée (220 ; 174).

## Claims

1. Support rail (100) for a bus bar adapter (200) for setting up and fixing electrical installation equipment (300), wherein the support rail (100) can be fixed in different position on the bus bar adapter (200), **characterised in that** the support rail (100) comprises at least one clamping device with in each case at least one adjustable actuating element (140, 160) which is adjustable between at least two positions relative to an appertaining fixing element (150, 170) provided on the support rail (100), wherein in at least one locking position in order to produce a clamping action at least one element (142, 172, 172') of the clamping device provided on the support rail (100) or a part-region of this element (142, 172, 172') is pressed against a part-region (220, 230, 260) of the bus bar adapter (200), so that a relative movement between the support rail (100) and the bus bar adapter (200) is prevented.

2. Support rail (100) as claimed in Claim 1, **characterised in that** at least one fixing element is a screw (140, 160).

3. Support rail (100) as claimed in Claim 2, **characterised in that** the appertaining fixing element comprises a bore (152, 176), the wall region of which interacts with a thread (146, 166) of the screw (140, 160).

4. Support rail (100) as claimed in Claim 3, **characterised in that** the bore is provided with an internal thread.

5. Support rail (100) as claimed in any one of the preceding claims, **characterised in that** at least one clamping device is designed so that in one locking position a part-region (260) of the bus bar adapter (200) can be clamped between a screw head (142) of a screw serving as an actuating element and a matching surface (154) of the fixing element (150).

6. Support rail (100) as claimed in any one of the preceding claims, **characterised in that** at least one clamping device is designed so that a fixing element comprises an expansion device (170).

7. Support rail (100) as claimed in any one of the preceding claims, **characterised in that** an actuation element (140, 160) of at least one clamping device is adjustable between a locking position and an unlocking position substantially in a straight line in a direction which extends substantially perpendicular to a longitudinal axis (202) of the bus bar adapter (200).

8. Support rail (100) as claimed in any one of the preceding claims, **characterised in that** an actuating element (140, 160) of at least one clamping device is adjustable between a locking position and an unlocking position substantially in a straight line in a direction which extends substantially parallel to a longitudinal axis (202) of the bus bar adapter (200).

9. Support rail (100) as claimed in Claim 7 or 8, **characterised in that** at least two clamping devices are provided, wherein the direction in which one fixing element (140) is adjustable between a locking position and unlocking position is not parallel to a direction in which a second fixing element (160) is adjustable between a locking position and an unlocking position.

10. Support rail (100) as claimed in Claim 9, **characterised in that** the two directions in which the respective fixing elements (140, 160) are adjustable between a locking position and an unlocking position extend substantially perpendicular to one another.

11. Support rail (100) as claimed in any one of the preceding claims, **characterised in that** at least one actuating element (140) can be actuated from a direction which extends substantially perpendicular to the longitudinal axis (202) of the bus bar adapter (200).

12. Support rail (100) as claimed in Claim 11, **characterised in that** the at least one actuating element (140) can be actuated through an opening in the support rail (100).

13. Support rail (100) as claimed in any one of the preceding claims, **characterised in that** at least one actuating element (160) can be actuated from a direction which extends substantially parallel to the longitudinal axis (202) of the bus bar adapter (200).

14. Support rail (100) as claimed in any one of the preceding claims, **characterised in that** the support rail has a least in a part-region a roughened surface for reinforcing the clamping action.

15. Support rail (100) as claimed in any one of the preceding claims, **characterised in that** the support rail has at least in a part-region a structured surface (174) for reinforcing the clamping action.

16. Support rail (100) as claimed in any one of the preceding claims, **characterised in that** the support rail (100) is produced from a plastics material.

17. Adapter system (10) for setting up and fixing electrical installation equipment (300) with at least one bus bar adapter (200) and at least one support rail (100) as claimed in any one of the preceding claims.

18. Adapter system (10) as claimed in Claim 17, **characterised in that** the bus bar adapter (200) and/or the support rail (100) have a roughened surface at least in a part-region.

19. Adapter system (10) as claimed in Claim 17 or 18, **characterised in that** the bus bar adapter (200) and/or the support rail (100) have a structured surface (220; 174) at least in a part-region.
